# EUROPEAN PATENT SPECIFICATION

(11) **EP 4 530 185 B1**
(45) Date of publication and mention of the grant of the patent: **01.04.2026**
(21) Application number: 23200101.6
(22) Date of filing: 27.09.2023
(51) Int. Cl.: B64D 11/00, A23G 9/20, A23G 9/22, A23G 9/28, A23G 9/50, A23G 9/52, A23G 9/04

(54) **GALLEY INSERT COLD TREAT SYSTEM**
BORDKÜCHENEINSATZSYSTEM MIT KALTBEHANDLUNG
SYSTÈME DE TRAITEMENT À FROID D'INSERT D'OFFICE

(43) Date of publication of application: 02.04.2025
(73) Proprietor: B/E Aerospace, Inc., Winston-Salem, NC 27105 (US)
(72) Inventor: SAN JUAN, Ferdinand, Pueblo, Santo Tomas City, 4234 (PH); DE TORRES, Emmanuel Macaladad, Kapayapaan Village, Calamba, 4028 (PH); ILAPAN, Christa Mizpah Diaz, Imus Cavatie City, 4103 (PH)
(74) Representative: Dehns

(56) References cited:
- EP-A1- 3 360 422
- US-A- 3 874 189
- US-A1- 2010 071 386
- US-A1- 2011 120 163

## Description

### Technical field

This disclosure relates to vehicle galley inserts and in particular to chilled vehicle galley inserts which store and dispense chilled goods.

### Background

A galley is an area designed for the handling and/or preparation of food and/or drinks. For example, an aircraft galley is an area of the aircraft where the cabin crew can prepare meals and/or refreshments for the passengers and/or other crew members. Galleys typically include a number of standardised compartments each capable of receiving a galley insert. Galley compartments typically have well-defined dimensions and allow different inserts to be stored within them so that the galley can be readily customized, and can be loaded and unloaded quickly, e.g. for fast turn-arounds between flights. Some foods and/or drinks needs to be stored at temperatures below ambient temperature and so galleys often include chiller units such as refrigerators and/or freezers for storing goods at low temperatures and/or for chilling goods down mid-journey. Vehicle galleys are generally small spaces. The restricted space means that it is not always possible to include multiple machines and/or luxuries.

US 2011/0120163 A1 describes a semi-frozen product dispenser for at least partially freezing and dispensing a product. The product dispenser may include two freezing barrels each defining a freezing chamber configured to receive the product. A refrigeration system is provided for at least partially freezing product in the freezing chamber. A dispensing valve system is also provided.

US 3874189 A describes a machine for producing frozen confections such as ice cream, or the like, wherein liquid mix is delivered from a storage tank through a freezing chamber to a draw-off valve from which the frozen mix is dispensed to cones or cups.

US 2010/071386 A1 describes a cooling device for installation in an aircraft, in particular a passenger aircraft.

### Summary

According to an aspect of this disclosure there is provided a vehicle galley insert cold treat making system in accordance with claim 1.

It will be appreciated that the galley insert of the present disclosure is configured to be installable in a single standard vehicle galley compartment space, the dimensions of which are strictly defined for specific vehicle galleys. The vehicle galley insert cold treat making system is configured to be installed in an aircraft galley compartment.

Throughout this disclosure the vehicle galley insert cold treat making system may be referred to as the system.

It will be appreciated by the skilled person that the system of the present disclosure allows for ice cream and slushy products to be produced in situ in a vehicle galley. The cooling system is therefore configured to cool the contents of the ice cream unit and the slushy unit to transform a pre-mixed liquid into the desired ice cream product or slushy product. In some examples, the system may comprise a plurality of cooling systems, each configured to separately cool the ice cream unit and the slushy unit. It will be appreciated by the skilled person however that the ice cream unit and the slushy unit may have similar required temperatures for producing their respective products. Therefore, in another set of examples a single cooling system may be used to cool both the ice cream unit and the slushy unit. This reduces the number of components required in the system, allowing more space for the ice cream unit and slushy unit respectively.

During long journeys, and especially during long flights, passengers (especially younger children) can experience boredom which can lead to arguments and/or tantrums. This can result in unpleasant and difficult experiences for passengers and difficult situations to be managed by staff. Therefore, while the galley has limited space and needs to provide for all passengers throughout a long journey, the system described here has an advantage of providing interest and enjoyment that can alleviate boredom on the long journey. In particular, as the machine can produce at least two different types of cold treat while only being a single galley insert and thus only requiring a single compartment in the galley, the system can improve overall passenger and staff experience and safety without compromising other services.

Typically, machines for producing slushy and/or ice cream products (e.g. soft serve ice cream) are fairly large in order to accommodate the necessary mixing device, product tank and dispenser. Allocating two galley spaces (i.e. one for slushy and one for ice cream) would be a significant imposition on the galley size and/or other services. However, according to this disclosure, it has been recognised that it is feasible to combine the two machines within a single vehicle galley insert unit. Although this means that the tank sizes for each unit are restricted, each can still be functional. The two units can also share the same chilling architecture as the required temperatures for the two types of product are not too dissimilar. For example, a slushy is typically served at around -3 degrees centigrade. Soft serve ice cream is typically served at around -3 to -6 degrees centigrade. In some examples therefore, the system may comprise a plurality of cooling systems, each configured to separately cool the ice cream unit and the slushy unit to a required temperature. However, as the temperature requirements for a slushy product and an ice cream product are similar, it is possible for both tanks to be housed within the same chiller cabinet (i.e. with a single cooling system), thereby saving significant space compared to two separate machines and permitting a dual purpose machine to be made within a single galley insert unit. The provision of two different types of cold treat makes the luxury nature of this unit viable as it can provide a suitable product for a larger audience and/or can provide some customers with multiple varied products to offset boredom.

The front of the vehicle galley insert cold treat making system may be openable to access the slushy unit and the ice cream unit, e.g. for re-filling purposes. The system comprises a first refilling port which connects to the slushy unit and a second refilling port which connects to the ice cream unit. The dual port configuration has the advantage of avoiding product cross-contamination. The first and second refilling ports are accessible from the front of a galley compartment, and connect to the top of the slushy unit and the ice cream unit. In some examples, each of the refilling ports further comprises a retractable hose configured to be stored inside the system and further configured to connect each of the refilling ports to an external source of liquid.

As the tanks for the two units are necessarily constrained in size, refilling will need to be more frequent than for larger standard machines. In addition, with the restricted space and a greater need to avoid significant spillages in vehicles such as aircraft, the refilling process should be as simple and risk free as possible. The retractable hoses make it easier to connect the tanks to a refill container (e.g. a bag or box or the like of pre-prepared mixture) without having to remove the tanks and without significant risk of spillage between the refill container and the tank.

In some examples, the system further comprises a first refilling pump configured to pump liquid from the first refilling port to the slushy unit and a second refilling pump configured to pump liquid from the second refilling port to the ice cream unit. In some examples, the refilling pumps are configured to pump the liquid through the retractable hoses into the respective slushy unit and ice cream unit. By using a refilling pump, an external source of liquid (e.g. a refill container) can be easily transferred into the system without the need to rely on gravity or awkward pouring of a pre-prepared liquid mixture into the ice cream unit and the slushy unit. Instead, the refill container can be placed securely on a counter top or on the floor adjacent to the unit and the container contents can be reliably transferred into the appropriate tank.

In some examples, the system comprises a removable cover for protecting the plurality of refill ports when they are not in use. In some examples each of the refill ports comprises a cover for protecting that refill port when not in use.

In some examples, the slushy unit comprises a first stirring element and the ice cream unit comprises a second stirring element. In some examples the stirring elements are controlled by a single common motor. In other examples the slushy unit and the ice cream unit have separate motors (i.e. a motor each). A single motor has the advantage of saving space, which is desirable in a system that is already constrained in space. Both stirring elements can be driven simultaneously via belts or gears from the same motor or they may be driven individually via a selector device such as a clutch if necessary. However, typically both can be driven at once and continuously. Where two motors are used, these can be individually tailored for speed and power of stirring and there is no need for gears or clutch mechanisms. In some examples, such arrangements may be more convenient by making more efficient use of available space (e.g. shape of space), even if the overall volume of two motors is greater than one). The stirring element in each of the slushy unit and the ice cream unit can be configured to stir the ice cream and/or slushy as appropriate. In some examples, the stirring element comprises a main shaft and a one or more blades protruding from the shaft. In some examples the blade has a spiral shape. The blade can be used to blend the contents of the ice cream unit or slushy unit, or can be used to stir the contents. The stirring element may be in continuous operation, or may be selectively operable. The stirring element may have a single set speed. The stirring element may have a variable speed. The set speed for the ice cream unit may be the same or different to the set speed for the slushy unit. The speeds may be controlled in together or separately.

In some examples, the first and second stirring elements are placed horizontal in the bottom of each of the ice cream unit and slushy unit. In some examples the stirring elements are configured to scrape at least one of the sides of the respective tanks. In some examples the stirring elements are configured to scrape the bottom and some of the sides of the respective tanks. The skilled person will appreciate that by stirring the ice cream/slushy product whilst they are being cooled the ice structure of the freezing item can be controlled.

In some examples the dispensing unit is connected to the bottom of the slushy unit and to the bottom of the ice cream unit. Dispensing from the bottom ensures that the whole tank can be emptied. In some examples, the dispensing unit further comprises at least one pump. In some examples there is a single pump which may draw from either tank via valves. However, in other examples the dispensing unit comprises a first pump selectively operable to pump ice cream product from the ice cream unit and wherein the dispensing unit further comprises a second dispensing tank selectively operable to pump slushy product from the slushy unit.

In some examples, the dispensing unit comprises a first dispensing port for dispensing ice cream and a second dispensing port for dispensing slushy. In some examples the dispensing unit comprises a single dispensing port configured to selectively dispense either a slushy product or an ice cream product which may allow space and weight saving. However, two separate dispensing ports allows two products to be served simultaneously which is more time efficient and prevents product cross-contamination.

In some examples, the system further comprises a chiller space for storing pre-sealed ice cream tubs. In some potentially overlapping examples, the system further comprises a cup and/or cone dispending station for dispensing cups and/or cones for the dispensed ice cream and/or slushy product. The system may comprise a cup sealing device which can seal a cup after it has been filled. This allows a user to select a desired product, dispense it into the cup and then seal the cup for onward travel, e.g. for returning to a seat or even for enjoying on a separate onward section of travel.

In some examples, the slushy unit and the ice cream unit are located side by side within a compartment. This arrangement is particularly advantageous as it provides easy access to both units (and their respective tanks) from the top of the compartment. It can also help to locate the two stirring elements (when used) in close proximity to each other. It has been found that there is sufficient space within a compartment to accommodate the two tanks in this side-by-side arrangement with appropriately dimensioned stirring elements within the tank and with sufficient space to accommodate the filling and dispensing pumps if used, the refilling ports and retractable hoses, if used. In some examples the cooling system is located at the back of the unit, i.e. behind the slushy making tank and the ice cream making tank. It will be appreciated that other configurations may also be possible, e.g. the slushy unit and the ice cream unit may be stacked on top of each other.

In some examples, the system further comprises at least one flavour tank connected to the dispensing unit for selectively adding flavours to the ice cream and/or slushy product. Whilst throughout this disclosure a single ice cream maker and single slushy maker are discussed, it will be appreciated that where space permits, the idea can be extended to include a third unit, which may be configured either as a slushy unit or an ice cream unit.

### Detailed description

Certain preferred examples of this disclosure will now be described, by way of example only, with reference to the accompanying drawings, in which:
FIG.1 shows a front view of the vehicle galley insert cold treat making system according to an example of the present disclosure;
FIG. 2 shows a top down cross-sectional view of the vehicle galley insert cold treat making system shown in FIG. 1;
FIG. 3 shows a sideways cross-sectional view of the vehicle galley insert cold treat making system shown in FIG. 1 and FIG. 2;
FIG. 4 shows a perspective view of an aircraft galley, with the cold treat making system installed according to an example of the present disclosure.

The arrangements discussed below will be understood to be exemplary only. Further, although the below described examples are discussed in relation to an aircraft galley, it will be understood that the gallery insert beverage making system of the present disclosure may be used in any vehicle galley. For example, the galley of a coach, or a train. Further, it is envisaged that the novel concepts disclosed herein may be applied to systems independent of vehicle galleys.

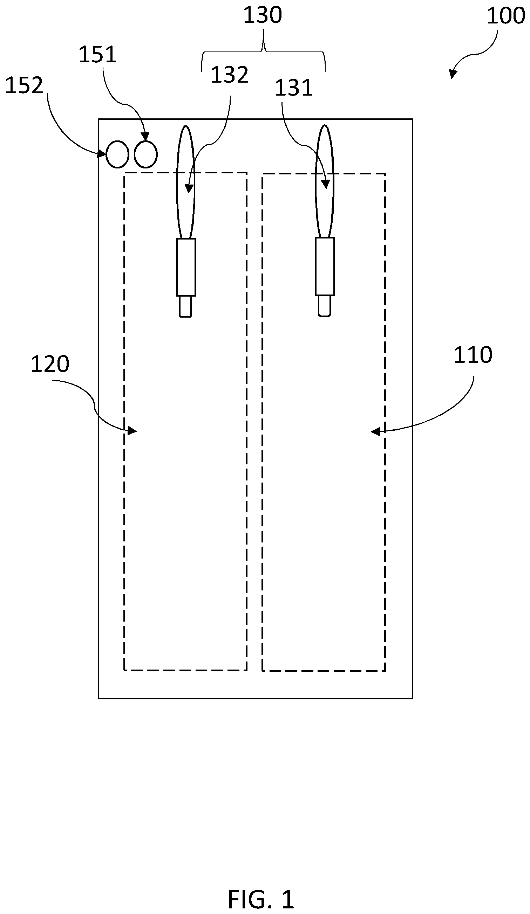

FIG. 1 shows a front view of an example cold treat making system 100. At the front of the system 100 are two dispensing ports 131 and 132 that are part of the dispensing unit 130, and two refiling ports 151 and 152. Internal to the system (shown by dashed lines in this figure) are a slushy unit 110 and an ice cream unit 120. The refilling ports 151, 152 are connected (not shown) to the slushy unit 110 and the ice cream unit 120 to allow for them to be refilled with a pre-prepared liquid mixture which is then used to make a slushy product or ice cream product respectively. Each of the slushy unit 110 and the ice cream unit 120 are also connected to the dispensing unit 130, for a user to be able to dispense a slushy product or an ice cream product when each of the respective dispensing ports 131 and 132 are operated. Whilst in this example two dispensing ports 131, 132 are shown, the skilled person will appreciate that the functionality may be equally performed by a single dispensing port linked by valves to both the slushy unit 110 and the ice cream unit 120.

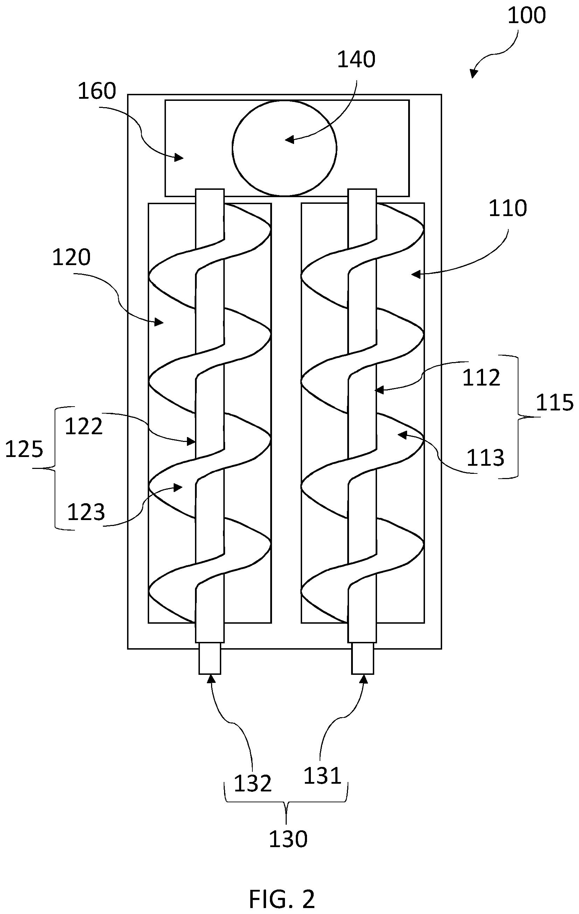

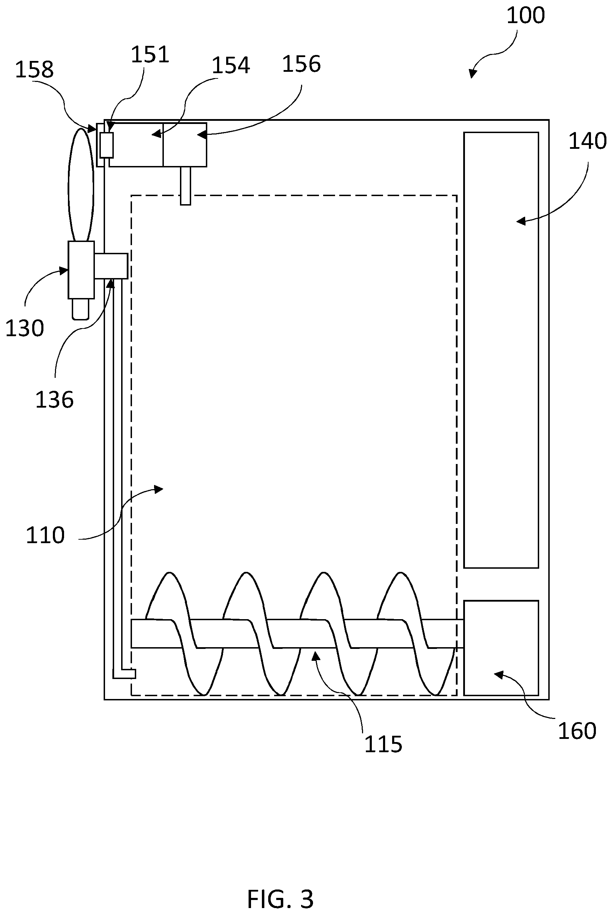

FIG. 2 shows a top down cross-sectional view of the same example cold treat making system 100 as shown in FIG. 1, with the slushy unit 110 and ice cream unit 120 shown side-by-side. At the back of the cold treat making system 100 is shown a cooling system 140 and a motor 160, which is located below the cooling system as shown further in FIG. 3. The motor 160 rotates stirring elements 115, 125 located respectively in the slushy unit 110 and the ice cream unit 120. Each of the stirring elements 115, 125, has a main shaft 112, 122 with a blade 113, 123 which spirals around the main shaft 112, 122. The motion of the stirring elements 115, 125 acts both to blend the contents of the slushy unit 110 and ice cream unit 120 and to prevent the contents freezing solid, thereby keeping the slushy product and ice cream in a state which can be dispensed when required. It will be appreciated that whilst a single motor 160 is shown in this example, in other examples there may be sperate units for both the slushy unit 110 and the ice cream unit 120. The motor 160 may be configured to continuously rotate the stirring elements 115,125, at a constant speed, or in other examples the speed may be variable and/or the times at which the stirring element is activated may be variable. The use of the stirring elements 115, 125 may improve the circulation of liquid inside the slushy unit 110 and the ice cream unit 120 to prevent the growing of ice crystals. The cooling system 140 may be any suitable refrigeration equipment capable of reducing the compartment to the required temperature (typically -3 to -6 degrees centigrade), but is typically a compressor-type cooler with a compressor, evaporator, condenser, etc.

FIG. 3 shows the example cold treat making system 100 as shown in FIG. 1 and FIG. 2 from the side. Inside the slushy unit 110 is seen the stirring element 115 connected to the motor 160. The stirring element 115 is located at the bottom of the slushy unit 110 so that the stirring element 115 will interact with any volume of slushy product held inside the slushy unit 110. The cooling unit 140 is shown at the back of the system 100 above the motor 160 which leaves plenty of room towards the front of the system for the tanks. The slushy unit 110 is connected to the dispensing unit 130 via a first dispensing pump 136 which will pump the slushy product from the bottom of the slushy unit 110 out through the dispensing unit 130 when the dispensing unit 130 is operated. Although not visible in this figure, the ice cream unit 120 is connected to the dispensing unit 130 via a second dispensing pump which will pump the ice cream product from the bottom of the ice cream unit 120 out through the dispensing unit 130 when the dispensing unit 130 is operated.

The first refilling port 151 is protected by a first removable cover 158. Behind the first refilling port 151 is shown a compartment in which a first retractable hose 154 is stored. The first retractable hose 154 can be pulled out from the first refilling port 151 when the first removable cover 158 has been removed, to connect the slushy unit 110 to an external source of liquid for refilling, e.g. a refilling container. Behind the first retractable hose 154 is shown a first refilling pump 156 which is configured to pump liquid in through the first refilling port 151 and to the slushy unit 110.

Although not shown in this figure, it will be appreciated that a corresponding second refilling port is protected by a second removable cover. Behind the second refilling port is a compartment in which a second retractable hose is stored. The second retractable hose can be pulled out from the second refilling port when the second removable cover has been removed, to connect the ice cream unit 120 to an external source of liquid for refilling, e.g. a refilling container. Behind the second retractable hose is a second refilling pump which is configured to pump liquid in through the second refilling port and to the ice cream unit 120. These devices can all have exactly the same arrangement as those shown in Figure 3, but with respect to the ice cream unit instead of the slushy unit.

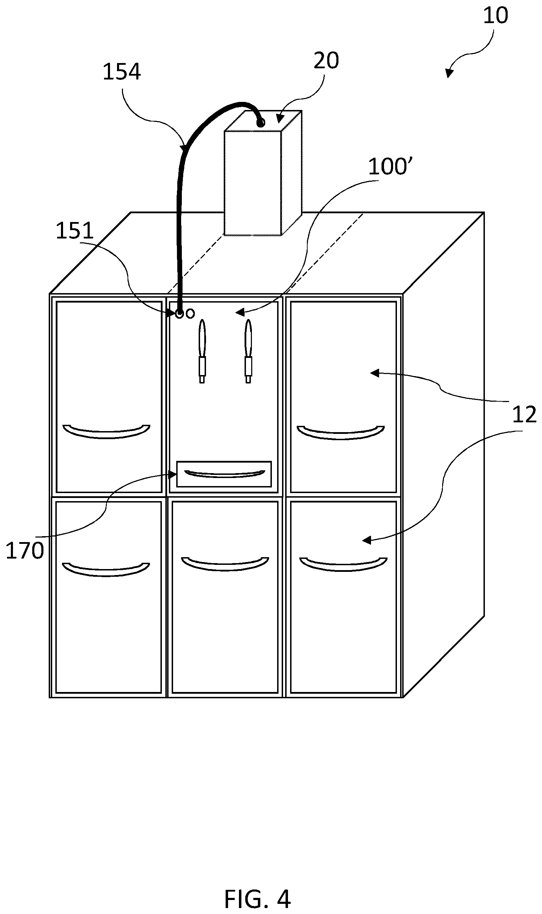

FIG. 4 shows an example vehicle galley 10 (such as an aircraft galley) containing a plurality of galley compartments 12. In one of the compartments 12 is installed a galley insert cold treat making system 100'. Whilst in this example each of the galley compartments 12 are shown to be of the same size, the skilled person will appreciate that vehicle galley can comprise two different sizes of galley compartments, and various types of galley inserts will be installed into these compartments (e.g. a hot beverage unit, a chiller unit, an oven, a trolley unit etc.). The cold treat making system 100' is the same as that described above with reference to FIGS. 1-3, except that in this example the cold treat making system 100' is also provided with an additional space (e.g. drawer or compartment) 170, which is openable, in this example by a handle. The front of the galley insert cold treat making system 100' may be separately openable for maintenance and cleaning operations.

In this example, the galley insert cold treat making system 100' is shown whilst the slushy refilling port 151 is in use. The retractable hose 154 is pulled out from the refilling port 151 and inserted into an external source of liquid, i.e. a refilling container 20. The refilling pump (not shown in FIG. 4) is configured to pump liquid from the refilling container 20 into the slushy unit 110. The ice cream unit 120 can be similarly refilled via its refilling port 152.

In some examples the additional space 170 is configured as a chiller space for storing pre-sealed ice cream tubs. When this additional space 170 is a chiller space, the cooling unit 140 is additionally configured to cool the internal volume of the chiller space.

In other examples, the additional space 170 may be configured to store ice cream cones and/or cups for the ice cream product and slushy product to be dispensed into. In some examples the galley insert cold treat making system may also comprise a sealing unit for sealing a dispensed slushy product or a dispensed ice cream product in a container.

The skilled person will appreciate that galley compartments designed for aircraft are normally of standardised dimensions for ease of interoperability. The galley insert cold treat making system 100' may in some examples have the dimensions of 570 mm (length), 287 mm (width) and 563 mm (height). It will be appreciated that this is just one example, and that compartment sizes may vary for different vehicles.

Each of the slushy unit 110 and the ice cream unit 120 may have the dimensions of approximately 10 - 14 cm wide, approximately 30 - 35 cm tall and 30 - 40 cm depth. The additional space 170 may have the dimensions of approximately 20 - 30 cm wide, 6 - 10 cm tall and 30 - 40 cm depth. When the additional space 170 is a chiller space, it may have a capacity of 12 pre-prepared ice cream cups, each of 4 oz or 100ml capacity.

The galley insert cold treat making system of the present disclosure may therefore enable the production of chilled drinks (e.g. such as frozen slushy drinks) and ice cream products (e.g. such as soft-serve ice cream) within a vehicle galley (such as an aircraft galley). This offers an improved customer experience over the usual offering of hot water, or cold beverages served from cans or bottles.

It will be appreciated by those skilled in the art that the disclosure has been illustrated by describing one or more specific aspects thereof, but is not limited to these aspects; many variations and modifications are possible, within the scope of the accompanying claims.

## Claims

1. A vehicle galley insert which is a cold treat making system (100) comprising:
a slushy unit (110) configured to make a slushy product;
an ice cream unit (120) configured to make an ice cream product;
a cooling system (140) configured to cool the slushy unit (110) and the ice cream unit (120); and
a dispensing unit (130), wherein the slushy unit (110) and the ice cream unit (120) are connected to the dispensing unit (130) for selectively dispensing slushy product and ice cream;
wherein the system (100) further comprises a first refilling port (151) which connects to the slushy unit (110) and a second refilling port (152) which connects to the ice cream unit (120); and
**characterised in that**:
the vehicle galley insert cold treat making system is configured to be installed in an aircraft galley compartment (12); and
the first and second refilling ports (151, 152) are accessible from the front of the galley compartment (12), and connect to the top of the slushy unit (110) and the ice cream unit (120).

2. A vehicle galley insert cold treat making system (100) according to claim 1, wherein each of the first and second refilling ports (151, 152) further comprises a retractable hose (154) configured to be stored inside the system and further configured to connect each of the refilling ports (151, 152) to an external source of liquid.

3. A vehicle galley insert cold treat making system (100) according to claim 1 or 2, further comprising a first refilling pump (156) configured to pump liquid from the first refilling port (151) to the slushy unit (110) and a second refilling pump configured to pump liquid from the second refilling port (152) to the ice cream unit (120).

4. A vehicle galley insert cold treat making system (100) according to any preceding claims, wherein the system comprises a removable cover (158) for protecting the plurality of refilling ports (151, 152) when not in use, or wherein each of the plurality of refilling ports (151, 152) comprises a cover for protecting that refilling ports (151, 152) when not in use.

5. A vehicle galley insert cold treat making system (100) according to any preceding claim, wherein the slushy unit (110) comprises a first stirring element (115) and the ice cream unit (120) comprises a second stirring element (125); and
wherein the first and second stirring elements (115, 125) are driven by a common motor (160).

6. A vehicle galley insert cold treat making system (100) according to any of claims 1 to 4, wherein the slushy unit (110) comprises a first stirring element (115) and the ice cream unit (120) comprises a second stirring element (125); and
wherein the system comprises a first motor arranged to drive the first stirring element (115) and wherein the system comprises a second motor arranged to drive the second stirring element (125).

7. A vehicle galley insert cold treat making system (100) according to claim 5 or 6, wherein the first and second stirring elements (115, 125) are located horizontally in the bottom of their respective unit (110, 120).

8. A vehicle galley insert cold treat making system (100) according to any preceding claim, wherein the dispensing unit (130) is connected to the bottom of the slushy unit (110) and to the bottom of the ice cream unit (120).

9. A vehicle galley insert cold treat making system (100) according to any preceding claim, wherein the dispensing unit (130) further comprises a first dispensing pump (136) selectively operable to pump ice cream product from the ice cream unit (120), and wherein the dispensing unit further comprises a second dispensing pump selectively operable to pump slushy product from the slushy unit (110).

10. A vehicle galley insert cold treat making system (100) according to any preceding claim, wherein the dispensing unit (130) comprises a first dispensing port (132) for dispensing ice cream product and a second dispensing port (131) for dispensing slushy product.

11. A vehicle galley insert cold treat making system (100) according to any preceding claim, wherein the system further comprises a chiller space (170) for storing pre-sealed ice cream tubs.

12. A vehicle galley insert cold treat making system (100) according to any preceding claim, wherein the system further comprises a cup and/or cone dispensing station for dispensing cups and/or cones for the dispensed ice cream and/or slushy product.

13. A vehicle galley insert cold treat making system (100) according to any preceding claim, wherein the system further comprises at least one flavour tank connected to the dispensing unit (130) for selectively adding flavours to the ice cream and/or slushy product.

## Patentansprüche

1. Bordkücheneinsatz für ein Fahrzeug, der ein System zum Herstellen von kalten Leckereien (100) darstellt, umfassend:
eine Slush-Eiseinheit (110), die zum Herstellen eines Slush-Eisprodukts konfiguriert ist;
eine Eiscremeeinheit (120), die zum Herstellen eines Eiscremeprodukts konfiguriert ist;
ein Kühlsystem (140), das zum Kühlen der Slush-Eiseinheit (110) und der Eiscremeeinheit (120) konfiguriert ist; und
eine Abgabeeinheit (130), wobei die Slush-Eiseinheit (110) und die Eiscremeeinheit (120) mit der Abgabeeinheit (130) verbunden sind, um selektiv Slush-Eisprodukt und Eiscremeprodukt abzugeben;
wobei das System (100) ferner eine erste mit der Slush-Eiseinheit (110) verbundene Nachfüllöffnung (151) und eine zweite mit der Eiscremeeinheit (120) verbundene Nachfüllöffnung (152) umfasst; und
**dadurch gekennzeichnet, dass**:
das System zum Herstellen von kalten Leckereien als Bordkücheneinsatz für ein Fahrzeug zum Einbauen in ein Bordküchenfach eines Luftfahrzeugs (12) konfiguriert ist; und
die erste und zweite Nachfüllöffnung (151, 152) von der Vorderseite des Bordküchenfachs (12) zugänglich sind und mit der Oberseite der Slush-Eiseinheit (110) und der Eiscremeeinheit (120) verbunden sind.

2. System zum Herstellen von kalten Leckereien als Bordkücheneinsatz für ein Fahrzeug (100) nach Anspruch 1, wobei jede der ersten und zweiten Nachfüllöffnung (151, 152) ferner einen einziehbaren Schlauch (154) umfasst, der zum Aufbewahren im Inneren des Systems konfiguriert ist und ferner zum Verbinden jeder der Nachfüllöffnungen (151, 152) mit einer externen Flüssigkeitsquelle konfiguriert ist.

3. System zum Herstellen von kalten Leckereien als Bordkücheneinsatz für ein Fahrzeug (100) nach Anspruch 1 oder 2, ferner umfassend eine erste Nachfüllpumpe (156), die zum Pumpen von Flüssigkeit von der ersten Nachfüllöffnung (151) zu der Slush-Eiseinheit (110) konfiguriert ist, und eine zweite Nachfüllpumpe, die zum Pumpen von Flüssigkeit von der zweiten Nachfüllöffnung (152) zu der Eiscremeeinheit (120) konfiguriert ist.

4. System zum Herstellen von kalten Leckereien als Bordkücheneinsatz für ein Fahrzeug (100) nach einem der vorhergehenden Ansprüche, wobei das System eine abnehmbare Abdeckung (158) zum Schützen der Vielzahl von Nachfüllöffnungen (151, 152) bei Nichtgebrauch umfasst oder wobei jede der Vielzahl von Nachfüllöffnungen (151, 152) eine Abdeckung zum Schützen dieser Nachfüllöffnungen (151, 152) bei Nichtgebrauch umfasst.

5. System zum Herstellen von kalten Leckereien als Bordkücheneinsatz für ein Fahrzeug (100) nach einem der vorhergehenden Ansprüche, wobei die Slush-Eiseinheit (110) ein erstes Rührelement (115) umfasst und die Eiscreme-Einheit (120) ein zweites Rührelement (125) umfasst; und
wobei das erste und zweite Rührelement (115, 125) von einem gemeinsamen Motor (160) angetrieben werden.

6. System zum Herstellen von kalten Leckereien als Bordkücheneinsatz für ein Fahrzeug (100) nach einem der Ansprüche 1 bis 4, wobei die Slush-Eiseinheit (110) ein erstes Rührelement (115) umfasst und die Eiscreme-Einheit (120) ein zweites Rührelement (125) umfasst; und
wobei das System einen ersten Motor umfasst, der zum Antreiben des ersten Rührelements (115) angeordnet ist, und wobei das System einen zweiten Motor umfasst, der zum Antreiben des zweiten Rührelements (125) angeordnet ist.

7. System zum Herstellen von kalten Leckereien als Bordkücheneinsatz für ein Fahrzeug (100) nach Anspruch 5 oder 6, wobei sich das erste und zweite Rührelement (115, 125) horizontal in dem Boden ihrer jeweiligen Einheit (110, 120) befinden.

8. System zum Herstellen von kalten Leckereien als Bordkücheneinsatz für ein Fahrzeug (100) nach einem der vorhergehenden Ansprüche, wobei die Abgabeeinheit (130) mit dem Boden der Slush-Eiseinheit (110) und mit dem Boden der Eiscremeeinheit (120) verbunden ist.

9. System zum Herstellen von kalten Leckereien als Bordkücheneinsatz für ein Fahrzeug (100) nach einem der vorhergehenden Ansprüche, wobei die Abgabeeinheit (130) ferner eine erste Abgabepumpe (136) umfasst, die selektiv zum Pumpen von Eiscremeprodukt aus der Eiscremeeinheit (120) betreibbar ist, und wobei die Abgabeeinheit ferner eine zweite Abgabepumpe umfasst, die selektiv zum Pumpen von Slush-Eisprodukt aus der Slush-Eiseinheit (110) betreibbar ist.

10. System zum Herstellen von kalten Leckereien als Bordkücheneinsatz für ein Fahrzeug (100) nach einem der vorhergehenden Ansprüche, wobei die Abgabeeinheit (130) eine erste Abgabeöffnung (132) zum Abgeben von Eiscremeprodukt und eine zweite Abgabeöffnung (131) zum Abgeben von Slush-Eisprodukt umfasst.

11. System zum Herstellen von kalten Leckereien als Bordkücheneinsatz für ein Fahrzeug (100) nach einem der vorhergehenden Ansprüche, wobei das System ferner einen Kühlraum (170) zum Aufbewahren von vorversiegelten Eiscremebehältern umfasst.

12. System zum Herstellen von kalten Leckereien als Bordkücheneinsatz für ein Fahrzeug (100) nach einem der vorhergehenden Ansprüche, wobei das System ferner eine Becher- und/oder Waffelabgabestation zum Abgeben von Bechern und/oder Waffeln für das abgegebene Eiscreme- und/oder Slush-Eisprodukt umfasst.

13. System zum Herstellen von kalten Leckereien als Bordkücheneinsatz für ein Fahrzeug (100) nach einem der vorhergehenden Ansprüche, wobei das System ferner mindestens einen mit der Abgabeeinheit (130) verbundenen Aromastofftank zum selektiven Zugeben von Aromastoffen zu dem Eiscreme- und/oder Slush-Eisprodukt umfasst.

## Revendications

1. Insert d'office de véhicule qui est un système de fabrication de friandises froides (100) comprenant :
une unité de glace concassée (110) conçue pour fabriquer un produit de glace concassée ;
une unité de crème glacée (120) conçue pour fabriquer un produit de crème glacée ;
un système de refroidissement (140) conçu pour refroidir l'unité de glace concassée (110) et l'unité de crème glacée (120) ; et
une unité de distribution (130), dans lequel l'unité de glace concassée (110) et l'unité de crème glacée (120) sont reliées à l'unité de distribution (130) pour distribuer sélectivement le produit de glace concassée et la crème glacée ;
dans lequel le système (100) comprend en outre un premier orifice de remplissage (151) qui est relié à l'unité de glace concassée (110) et un second orifice de remplissage (152) qui est relié à l'unité de crème glacée (120) ; et
**caractérisé en ce que** :
le système de fabrication de friandises froides pour insert d'office de véhicule est conçu pour être installé dans un compartiment d'office (12) d'aéronef ; et
les premier et second orifices de remplissage (151, 152) sont accessibles à partir de l'avant du compartiment d'office (12), et sont reliés à la partie supérieur de l'unité de glace concassée (110) et de l'unité de crème glacée (120).

2. Système de fabrication de friandises froides pour insert d'office de véhicule (100) selon la revendication 1, dans lequel chacun des premier et second orifices de remplissage (151, 152) comprend en outre un tuyau rétractable (154) conçu pour être rangé à l'intérieur du système et conçu en outre pour relier chacun des orifices de remplissage (151, 152) à une source externe de liquide.

3. Système de fabrication de friandises froides pour insert d'office de véhicule (100) selon la revendication 1 ou 2, comprenant en outre une première pompe de remplissage (156) conçue pour pomper un liquide à partir du premier orifice de remplissage (151) vers l'unité de glace concassée (110) et une seconde pompe de remplissage conçue pour pomper un liquide à partir du second orifice de remplissage (152) vers l'unité de crème glacée (120).

4. Système de fabrication de friandises froides pour insert d'office de véhicule (100) selon l'une quelconque revendication précédente, dans lequel le système comprend un couvercle amovible (158) destiné à protéger la pluralité d'orifices de remplissage (151, 152) lorsqu'ils ne sont pas utilisés, ou dans lequel chacun de la pluralité d'orifices de remplissage (151, 152) comprend un couvercle destiné à protéger ces orifices de remplissage (151, 152) lorsqu'ils ne sont pas utilisés.

5. Système de fabrication de friandises froides pour insert d'office de véhicule (100) selon l'une quelconque revendication précédente, dans lequel l'unité de glace concassée (110) comprend un premier élément de brassage (115) et l'unité de crème glacée (120) comprend un second élément de brassage (125) ; et
dans lequel les premier et second éléments de brassage (115, 125) sont entraînés par un moteur commun (160).

6. Système de fabrication de friandises froides pour insert d'office de véhicule (100) selon l'une quelconque des revendications 1 à 4, dans lequel l'unité de glace concassée (110) comprend un premier élément de brassage (115) et l'unité de crème glacée (120) comprend un second élément de brassage (125) ; et
dans lequel le système comprend un premier moteur disposé pour entraîner le premier élément de brassage (115) et dans lequel le système comprend un second moteur disposé pour entraîner le second élément de brassage (125).

7. Système de fabrication de friandises froides pour insert d'office de véhicule (100) selon la revendication 5 ou 6, dans lequel les premier et second éléments de brassage (115, 125) sont situés horizontalement dans la partie inférieure de leur unité (110, 120) respective.

8. Système de fabrication de friandises froides pour insert d'office de véhicule (100) selon l'une quelconque revendication précédente, dans lequel l'unité de distribution (130) est reliée à la partie inférieure de l'unité de glace concassée (110) et à la partie inférieure de l'unité de crème glacée (120).

9. Système de fabrication de friandises froides pour insert d'office de véhicule (100) selon l'une quelconque revendication précédente, dans lequel l'unité de distribution (130) comprend en outre une première pompe de distribution (136) servant sélectivement à pomper un produit de crème glacée à partir de l'unité de crème glacée (120), et dans lequel l'unité de distribution comprend en outre une seconde pompe de distribution servant sélectivement à pomper un produit de glace concassée à partir de l'unité de glace concassée (110).

10. Système de fabrication de friandises froides pour insert d'office de véhicule (100) selon l'une quelconque revendication précédente, dans lequel l'unité de distribution (130) comprend un premier orifice de distribution (132) destiné à distribuer un produit de crème glacée et un second orifice de distribution (131) destiné à distribuer un produit de glace concassée.

11. Système de fabrication de friandises froides pour insert d'office de véhicule (100) selon l'une quelconque revendication précédente, dans lequel le système comprend en outre un espace de refroidisseur (170) destiné à stocker des pots de crème glacée pré-scellés.

12. Système de fabrication de friandises froides pour insert d'office de véhicule (100) selon l'une quelconque revendication précédente, dans lequel le système comprend en outre une station de distribution de tasses et/ou de cornets destiné à distribuer des tasses et/ou des cornets pour le produit de crème glacée et/ou de glace concassée distribué.

13. Système de fabrication de friandises froides pour insert d'office de véhicule (100) selon l'une quelconque revendication précédente, dans lequel le système comprend en outre au moins un réservoir de saveur relié à l'unité de distribution (130) destiné à ajouter sélectivement des saveurs au produit de crème glacée et/ou de glace concassée.
